# EUROPÄISCHE PATENTSCHRIFT

(11) **EP 1 572 502 B1**
(45) Veröffentlichungstag und Bekanntmachung des Hinweises auf die Patenterteilung: **09.08.2006**
(21) Anmeldenummer: 03775097.3
(22) Anmeldetag: 31.10.2003
(51) Int. Cl.: B60R 21/01, B60R 25/00

(54) **VORRICHTUNG FÜR DEN INSASSENSCHUTZ IN EINEM KRAFTFAHRZEUG UND ZUR DIEBSTAHLSICHERUNG DES KRAFTFAHRZEUGES**
DEVICE FOR OCCUPANT PROTECTION IN A MOTOR VEHICLE AND FOR ANTI-THEFT PROTECTION OF THE MOTOR VEHICLE
DISPOSITIF DE PROTECTION DES OCCUPANTS D'UN VEHICULE AUTOMOBILE ET DE PROTECTION ANTIVOL DUDIT VEHICULE

(30) Priorität: 20.11.2002 DE 10254203
(43) Veröffentlichungstag der Anmeldung: 14.09.2005
(73) Patentinhaber: SIEMENS AKTIENGESELLSCHAFT, 80333 München (DE)
(72) Erfinder: GILA, Janos, A-2340 Mödling (AT); HEROLD, Jürgen, 63743 Aschaffenburg (DE); HOFBECK, Klaus, 92318 Neumarkt (DE); KONRAD, Wolfgang, A-2340 Mödling (AT); RÖSEL, Birgit, 93055 Regensburg (DE); ZECHA, Stephan, 63768 Hösbach (DE)
(86) Internationale Anmeldenummer: PCT/DE2003/003622
(87) Internationale Veröffentlichungsnummer: WO 2004/045916

(56) Entgegenhaltungen:
- EP-A- 0 836 971
- DE-A- 19 957 536

## Beschreibung

Die Erfindung betrifft eine Vorrichtung für den Insassenschutz in einem Kraftfahrzeug und zur Diebstahlsicherung des Kraftfahrzeugs. Dabei werden zumindest Teile einer Erkennungseinrichtung des Entfaltungsverhaltens eines Gaskissens zum Insassenschutz in einem Kraftfahrzeug gleichzeitig auch zur Zugangskontrolle im Sinne einer Diebstahlsicherung des Kraftfahrzeugs verwendet.

Üblicherweise wird in der Automobilindustrie der bestmögliche Schutz eines Fahrzeuginsassen durch einen sich im Unfallgeschehen entfaltenden Gassack dann gewährleistet, wenn der zu schützende Fahrzeuginsasse aufrecht, angegurtet und zurückgelehnt auf dem Fahrzeugsitz sitzt, so dass er einen gewissen Mindestabstand von der Auslöseeinheit des Gassacks einhält.

Um jedoch auch solche Fahrzeuginsassen bei einem Unfallgeschehen bestmöglich vor Verletzungen zu schützen, die sich nicht in dieser bevorzugten Sitzposition befinden, werden Vorrichtungen für den Insassenschutz in einem Kraftfahrzeug eingesetzt, die das Auslöseverhalten eines Gassackes an eine solche sogenannte "Out-Of-Position"-Sitzposition eines Fahrzeuginsassen anpassen.

Befindet sich beispielsweise ein Fahrzeuginsasse in einer nach vorne gebeugten Haltung, kann ein sich vollständig entfaltender Gassack unter Umständen sogar zu einer Verletzung des Fahrzeuginsassen führen. Dann ist es beispielsweise von Vorteil, nur eine erste Stufe des Gassacks zu zünden, in der sich der Gassack nur teilweise und deshalb sanfter aufbläst. Gegebenenfalls kann es einen Fahrzeuginsassen sogar vor zusätzlichen Verletzungen schützen, wenn das Aufblasen des Gassacks ganz unterbunden wird.

Aus der europäischen Patentanmeldung EP 0 836 971 A1, die dem Oberbegriff des Anspruchs 1 entspricht ist eine Vorrichtung, bei der zur Erkennung einer "Out-Of-Position"-Sitzposition eines Fahrzeuginsassen das Aufblasverhalten des Gassacks während seiner Entfaltung überwacht wird:

Befindet sich ein Objekt oder eine Person zu nah vor der Auslöseeinheit des Gassacks, so kann sich dieser nicht ungehindert entfalten. Die behinderte Entfaltung des Gassacks wird durch die Vorrichtung erkannt und deutet auf eine "Out-of-Position"-Sitzposition des Fahrzeugsinsassen hin. Um eine mögliche Verletzung des Fahrzeuginsassen aufgrund dieser festgestellten Sitzposition zu vermeiden, wird das Aufblasverhalten des Gassacks entsprechend angepasst, beispielsweise durch eine reduzierte Aufblasgeschwindigkeit des Gassacks.

Zur Erkennung des abweichenden Aufblasverhaltens des Gassacks dient eine Infrarotsende-/empfangseinheit, die zunächst Infrarotstrahlung in den Gassack aussendet und die die von dem vorteilhafterweise reflektionsbeschichteten Innenmaterial des Gassacks reflektierte Infrarotstrahlung wieder empfängt. Die reflektierte Strahlung wird im Hinblick auf ihre Laufzeit seit dem Aussenden und/oder im Hinblick auf ihre Frequenzverschiebung in verschiedenen Entfaltungsrichtungen des Gassacks hin ausgewertet. Diese Informationen zum Ausbreitungsverhalten des Gassacks werden an eine Steuereinrichtung übermittelt, die die Aufblascharakteristik des Gassacks entsprechend beeinflussen kann (dortige Spalte 7, Zeile 51, bis Spalte 8, Zeile 23, und Patentanspruch 1).

Aus einem ganz anderen Bereich, dem Bereich des Diebstahlschutzes eines Kraftfahrzeugs, sind Systeme bekannt, die die Zugangsberechtigung einer Peson in das Kraftfahrzeug berührungslos überprüfen können und nur berechtigten Personen den Zutritt und den Betrieb des Kraftfahrzeugs freigeben.

Zu nennen ist dabei beispielsweise das in der deutschen Offenlegungsschrift 199 57 536 A1 offenbarte Diebstahlschutzsystem, das eine Sende-/Empfangseinheit in einem Kraftfahrzeug offenbart, die Radarsignale breitbandig moduliert aussendet und daraufhin auf Echosignale wartet. Ein Codegeber, der das Radarsignal empfängt, sendet ein zusätzlich moduliertes und codiertes Signal an die Sende-/Empfarigseinheit zurück. Eine Auswerteeinheit analysiert alle von der Sende-/Empfangseinheit empfangenen Echosignale einerseits nach einer Berechtigung des Codegebers und andererseits hinsichtlich der Entfernung des Codegebers zur Sende-/Empfangseinheit.

Die Aufgabe der vorliegenden Erfindung ist es, eine Vorrichtung und ein Verfahren für den Insassenschutz in einem Kraftfahrzeug zu schaffen, wobei zumindest Teile der Vorrichtung auch zur Diebstahlsicherung des Kraftfahrzeugs dienen können.

Diese Aufgabe wird gelöst durch eine Vorrichtung für den Insassenschutz in einem Kraftfahrzeug und zur Diebstahlsicherung des Kraftfahrzeugs gemäß Anspruch 1, die ein durch eine Fülleinrichtung mit Gas aufblasbares Gaskissen aufweist, sowie eine Sende-/Empfangseinrichtung für elektromagnetische Wellen und eine mit dieser verbundenen Insassenschutzauswerteeinrichtung. An dem Gaskissen ist eine Insassenschutz-Abfrageeinheit angeordnet, die von der Sende-/Empfangseinrichtung kontaktlos abgefragt werden kann. Dadurch werden der Insassenschutzauswerteeinrichtung Informationen über den Entfaltungsgrad und/oder die Entfaltungsgeschwindigkeit des Gaskissens bereitgestellt. Die Sende-/Empfangseinrichtung vermag außerdem eine tragbare Diebstahlschutz-Abfrageeinheit kontaktlos abzufragen und dadurch einer Diebstahlschutz-Auswerteeinrichtung Informationen über die Berechtigung der Diebstahlschutz-Abfrageeinheit und über die Entfernung der Diebstahlschutz-Abfrageeinheit von der Sende-/Empfangseinrichtung aufgrund des von der Diebstahlschutz-Abfrageeinheit zurückgesandten Signals zur Verfügung stellen.

Zweckmäßiger Weise ist dabei die Sende-/Empfangseinrichtung innerhalb der Fahrzeugarmatur angeordnet, vorzugsweise in der Nähe der Einfüllöffnung des Gassacks, so dass die von der Sende-/Empfangseinrichtung ausgestrahlte bzw. empfangene elektromagnetische Strahlung ungehindert in den Gassack gesendet bzw. von der Oberfläche des sich entfaltenden Gassacks empfangen werden kann. Es versteht sich von selbst, dass dabei die Anordnung innerhalb der Fahrzeugarmatur derart ausgebildet sein muss, dass dennoch eine gleichzeitige Verwendung der Sende-/Empfangseinheit für die Zugangskontrolle ermöglicht bleibt.

In einer vorteilhaften Ausführungsform können möglichst viele elektronische Baueinheiten der erfindungsgemäßen Vorrichtung sowohl für den Empfang und/oder das Aussenden von Signalen von bzw. zu einer Insassenschutz-Abfrageeinheit und einer Diebstahlschutz-Abfrageeinheit verwendet werden. Denkbar ist beispielsweise eine gemeinsame Nutzung der Sende-/Empfangsantenne.

In voneinander getrennten Insassenschutz- und Diebstahlschutzeinrichtungen ist es üblich, für den Insassenschutz eine entsprechend geeignete Insassenschutz-Auswerteeinrichtung und für den Diebstahlschutz eine entsprechend geeignete Diebstahlschutz-Auswerteeinrichtung zu verwenden. Im Sinne einer bestmöglichen Nutzung von elektronischen Baueinheiten sowohl für den Insassenschutz als auch für den Diebstahlschutz in einem Kraftfahrzeug ist es jedoch von Vorteil, dass die Insassenschutz-Auswerteeinrichtung und die Diebstahlschutz-Auswerteinrichtung Teil einer gemeinsamen Auswerteeinrichtung innerhalb eines einzigen Gehäuses sind.

Besonders geeignet ist eine entsprechende gemeinsame Auswerteeinrichtung, deren Funktionieren als Insassenschutz-Auswerteeinrichtung oder als Diebstahlschutz-Auswerteeinrichtung lediglich durch unterschiedliche Betriebsmodi von Software eingestellt wird.

In einer geeigneten Ausführungsform sind die Insassenschutz-Abfrageeinheiten, die die von der Sende-/Empfangseinheit empfangene Strahlung an die Sende-/Empfangseinheit zurücksenden, als Reflektoren an der Innenfläche des Gassackes auszugestalten.

Werden mehrere solcher Reflektoren innerhalb eines Gassackes verwendet, so ist es weiterhin von Vorteil, polarisierende Reflektoren einzusetzen. Sind solche polarisierenden Reflektoren an unterschiedlichen Stellen der Gassack-Innenfläche angeordnet, so kann anhand des empfangenen Polarisierungsgrades der elektromagnetischen Strahlung unterschieden werden, von welcher Reflektoreinheit die empfangene Strahlung stammt.

Um eine größere Anzahl von Insassenschutz-Abfrageeinheiten jedoch voneinander unterscheiden zu können, ist es weiterhin von Vorteil, diese als Transponder auszubilden. Solche Transpondereinheiten empfangen die von der Sende-/Empfangseinrichtung ausgesandte elektromagnetische Welle, und nutzen zumindest einen Teil deren Energie als Versorgungsenergie zur Versorgung einer Logikschaltung, die die empfangene elektromagnetische Welle durch einen individuellen Code modifiziert an die Sende-/Empfangseinrichtung zurücksendet.

Die Logikschaltung kann dabei in einfachster Weise als Schalter ausgebildet sein, der lediglich eine Sende-/Empfangsantenne gemäß einem gespeicherten Code ein- oder ausschaltet. Außerdem sind jedoch auch kompliziertere Logikschaltungen denkbar, die eine entsprechend kompliziertere Codierung ermöglichen. Beispielsweise kann die Logikschaltung auch mit einem Oszillator gebildet sein, der aktiv ein Signal erzeugt, das auf Anregung durch ein Signal bzw. eine Welle von der Sende-/Empfangseinrichtung als Welle zur Sende-/Empfangseinrichtung zurückgestrahlt wird. Hierbei kann jede Insassenschutz-Abfrageeinheit auf einer unterschiedlichen Frequenz strahlen. Es ist ebenso möglich, verschiedene Modulationen bei gleicher Frequenz zu verwenden. Wesentlich ist jedenfalls, dass die Signale der einzelnen Insassenschutz-Abfrageeinheiten von der Sende-/Empfangseinrichtung unterschieden werden können.

Ein erfindungsgemäßes Verfahren zum Schutz von Insassen eines Kraftfahrzeugs und zur Diebstahlsicherung des Kraftfahrzeugs unter Verwendung einer der bereits beschriebenen Ausführungsformen der erfindungsgemäßen Vorrichtung ist Gegenstand des Anspruchs 9.

Bei der Verwendung einer erfindungsgemäßen Vorrichtung ist es sinnvoll, den Betrieb eines Kraftfahrzeugs in zwei Arten zu trennen, den Normalbetrieb des Kraftfahrzeugs, ohne erfolgte Aktivierung der Fülleinrichtung zum Befüllen des aufblasbaren Gaskissens, und den Auslösefall, bei dem eine Aktivierung der Fülleinrichtung zum Befüllen des aufblasbaren Gaskissens bereits erfolgt ist oder unmittelbar bevorsteht.

Im Normalbetrieb des Kraftfahrzeugs dient die erfindungsgemäße Sende-/Empfangseinrichtung der Diebstahlkontrolle des Kraftfahrzeugs, während im Auslösefalls dieselbe Sende-/Empfangseinrichtung ausschließlich der Ermittlung des Entfaltungsgrads und/oder der Entfaltungsgeschwindigkeit des Gaskissens dient.

Um die beiden Betriebsmodi der kombinierten erfindungsgemäßen Vorrichtung noch besser voneinander trennen zu können, ist es weiterhin von Vorteil, dass zur Abfrage der Diebstahlschutz-Abfrageeinheit durch die Sende-/Empfangseinrichtung und zur Abfrage des Entfaltungsgrades und/oder der Entfaltungsgeschwindigkeit des Gaskissens jeweils unterschiedlich codierte Signale verwendet werden.

Besonders vorteilhaft ist es außerdem, die erfindungsgemäße Vorrichtung auch zur Überwachung der ordnungsgemäßen Funktionsfähigkeit der Insassenschutz-Abfrageeinheiten, beispielsweise der Transponder, zu verwenden. Die Sende-/Empfangseinheit sendet üblicherweise ohnehin in regelmäßigen Abständen Signale zur Abfrage der Diebstahlschutz-Abfrageeinheiten aus, beispielsweise von Chipkarten zur Fahrzeugzugangskontrolle, und wertet die empfangenen Signale der Diebstahlschutz-Abfrageeinheiten im Hinblick auf eine Zugangsberechtigung der Diebstahlschutz-Abfrageeinheiten aus.

Während dieser regelmäßigen Abfragen der Diebstahlschutz-Abfrageeinheiten durch die Sende-/Empfangseinheit werden gleichzeitig oder zumindest zeitversetzt dazu entsprechend geeignete Test-Sendesignale von der Sende-/Empfangseinheit an die Insassenschutz-Abfrageeinheiten ausgesandt. Die von den Insassenschutz-Abfrageeinheiten, beispielsweise den Transpondern, zurückgesandten Antwortsignale werden hinsichtlich spezifischer Empfangssignalparameter ausgewertet, wodurch die Auswerteeinheit eine mögliche Fehlfunktion umgehend feststellen kann.

Eine erkannte Fehlfunktion mindestens einer der Insassenschutz-Abfrageeinheiten kann daraufhin von der Insassenschutz-Auswerteeinrichtung zum Anlass genommen werden, die "Out-of-Position"-Erkennung im Auslösefall der erfindungsgemäßen Vorrichtung an den Ausfall der entsprechenden Insassenschutz-Abfrageeinheit anzupassen, bis hin zur Stilllegung der "Out-of-Position"-Erkennung. Gegebenenfalls kann dem Fahrer des betroffenen Fahrzeuges zusätzlich ein Warnhinweis in Form einer Airbagwarnlampe über die möglicherweise nur unzureichende Funktionsweise des Insassenschutzsystems angezeigt werden.

Die Erfindung wird nachfolgend anhand jeweils eines Ausführungsbeispiels der erfindungsgemäßen Vorrichtung bzw. des erfindungsgemäßen Verfahrens dargestellt.
Es zeigen:
- Figur 1: eine erfindungsgemäße Vorrichtung innerhalb eines Kraftfahrzeugs und
- Figur 2: ein erfindungsgemäßes Verfahren unter Verwendung der erfindungsgemäßen Vorrichtung.

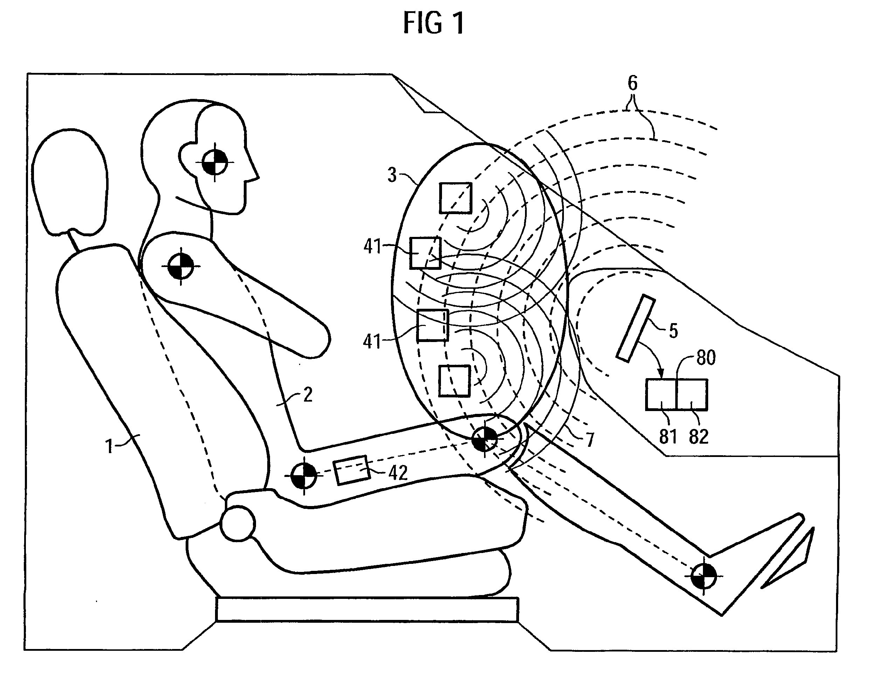

Die Figur 1 zeigt eine schematische Querschnittsdarstellung eines Fahrzeugcockpits mit einem Fahrzeugsitz 1 und einer darauf sitzenden Person 2. Ein aufgeblasenes Gaskissen 3 ist mit einer Anzahl von Insassenschutz-Abfrageeinheiten 41 ausgestattet, die als einfache Reflektoren oder als Transponder ausgebildet sein können. Eine Sende-/Empfangseinrichtung 5, die mit einer Insassenschutz-Auswerteeinrichtung 81 verbunden ist, sendet elektromagnetische Wellen an die Insassenschutz-Abfrageeinheiten 41. Diese senden geeignet codierte Wellen 7 zurück, die von der Sende-/Empfangseinrichtung 5 empfangen und von der Insassenschutz-Auswerteeinrichtung 81 verarbeitet werden.

Doch auch bei nicht aufgeblasenem Gassack ist die Sende-/Empfangseinrichtung 5 aktiv. Die Sende-/Empfangseinrichtung 5 sendet in regelmäßigen Zeitabständen Sendesignale 6 aus, die von einer Codekarte 42 empfangen werden. In der Figur 1 ist schematisch dargestellt, dass der Fahrzeugsinsasse die Codekarte 42 in seiner Hosentasche mit sich führt. Die Codekarte 42 sendet ein moduliertes Echosignal an die Sende-/Empfangseinheit 5 zurück.

Das zurückgesandte modulierte Echosignal der Codekarte 42 wird von der Sende-/Empfangseinheit 5 empfangen. Das empfangene Signal wird an die Diebstahlschutz-Auswerteeinrichtung 82 weitergeleitet, welche die Echosignale hinsichtlich einer Zugangsberechtigung der Codekarte 42 sowie die Entfernung zwischen der Codekarte 42 und der Sende-/Empfangseinheit 5 feststellt. Im vorliegend dargestellten Fall der Figur 1 erkennt die Diebstahlschutz-Auswerteeinrichtung 82 zwar eine Zugangsberechtigung der Codekarte 42, kann jedoch aufgrund der Information über die sehr geringe Entfernung des Codegebers 42 zur Sende-/Empfangseinheit 5 feststellen, dass der Fahrzeugpassagier sich im Fahrzeuginneren befindet. Aufgrund dieser Information wird die Diebstahlschutz-Auswerteeinrichtung 82 keine Entriegelung des Fahrzeugs veranlassen.

Um eine bessere Information über die Entfernung und die genaue Position einer Codekarte 42 im Verhältnis zur Sende-/Empfangseinheit 5 zu erlangen, werden die Signale der Sende-/Empfangseinheit 5 mit den Signalen weiterer Sende-/Empfangseinheiten an anderen Stellen des Kraftfahrzeugs verglichen, wodurch, beispielsweise über die bekannten Auswerteverfahren bei Triangulationsmessungen, die genaue Position einer Codekarte 42 festgestellt werden kann.

Stellt die Diebstahlschutz-Auswerteeinrichtung 82 auf diese Weise beispielsweise fest, dass sich eine berechtigte Codekarte 42 bzw. eine Person 1 mit einer berechtigten Codekarte 42 dem Fahrzeug nähert, so veranlasst die Diebstahlschutz-Auswerteeinrichtung 82 eine Entriegelung des Fahrzeugs und lässt eine Inbetriebnahme des Fahrzeugs zu.

Das Bezugszeichen 80 weist auf eine gemeinsame Auswerteeinrichtung 80 hin, bei der sich die Insassenschutz-Auswerteeinrichtung 81 und die Diebstahlschutz-Auswerteeinrichtung 82 in einem Gerät innerhalb eines Gehäuses befinden. Wie bereits weiter oben ausgeführt kann die gemeinsame Auswerteeinrichtung 80 die beiden Funktionalitäten einer Insassenschutz-Auswerteeinrichtung 81 und eine Diebstahlschutz-Auswerteeinrichtung 82 dadurch voneinander trennen, dass für jede einzelne Funktionalität ein unterschiedlicher Softwaremodus vorgesehen ist.

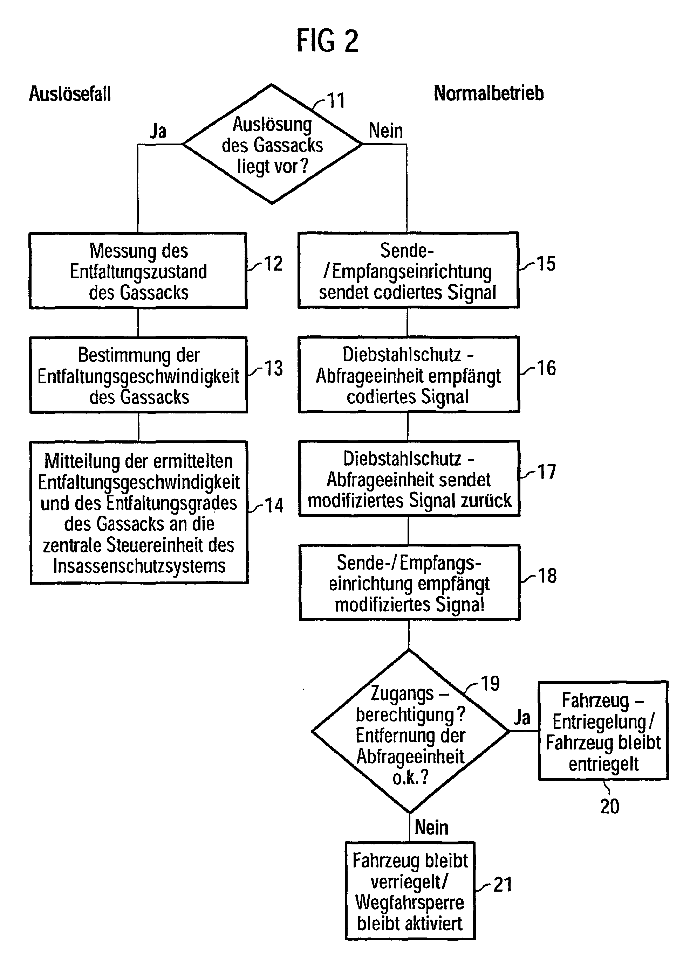

Die Figur 2 zeigt ein erfindungsgemäßes Verfahren, bei dem die erfindungsgemäße Vorrichtung zum Insassenschutz in einem Kraftfahrzeug und zu dessen Diebstahlschutz eingesetzt wird:

In einem ersten Verfahrensschritt 11 wird festgestellt, ob eine Auslöseentscheidung für das Aufblasen des Gassack 3 vorliegt. Dies wird der Insassenschutz-Auswerteeinrichtung 81 innerhalb der Auswerteeinrichtung 80 durch die zentrale Steuereinheit des Insassenschutzsystems mitgeteilt.

Liegt eine solche Auslöseentscheidung vor, so wird in einem zweiten und dritten Verfahrenschritt 12 und 13 mit Hilfe der Sende-/Empfangseinheit 5 und mit Hilfe der Insassenschutz-Abfrageeinheiten 41 an der Innenseite des Gassacks 3 dessen Entfaltungszustand und dessen Entfaltungsgeschwindigkeit ermittelt. Wie bereits weiter oben beschrieben erfolgt diese Auswertung in der Insassenschutz-Auswerteeinrichtung 81 anhand der von der Sende-/Empfangseinheit ausgesandten Signale 6 und modifiziert wieder empfangenen Signale 7, deren Rücklaufzeiten je nach Entfernung der jeweiligen Insassenschutz-Abfrageeinheit 41 von der Sende-/Empfangseinheit 5 unterschiedlich sind und deren Frequenzen aufgrund des Dopplereffekts je nach Ausbreitungsgeschwindigkeit des Gassacks 3 in unterschiedlichem Maß zu höheren Werten hin verschoben sind.

Die Information über den jeweiligen Entfaltungsgrad und die Entfaltungsgeschwindigkeit des Gassacks 3 und insbesondere die sich daraus ergebende wichtige Information darüber, ob sich ein Hindernis im Entfaltungsraum des Gassäcks 3 befindet, wird nachfolgend von der Insassenschutz-Auswerteeinrichtung 81 innerhalb der Auswerteeinrichtung 80 an die zentrale Steuereinheit des Insassenschutzsystems mitgeteilt. Dies ist als Verfahrensschritt 14 in der Figur 2 dargestellt.

Das Vorhandensein eines Hindernisses im Ausbreitungsraum des Gassacks 3 kann dann dazu führen, das Aufblasen des Gassacks 3 zu verändern so zu verändern, dass entsprechend der festgestellten "Out of Position" - Sitzposition des Fahrzeuginsassen dieser dennoch bestmöglich durch den Gassack geschützt wird. Dies kann beispielsweise dadurch geschehen, dass eine zweite Auslösestufe zum vollständigen Aufblasen des Gaskissens nicht aktiviert wird.

Liegt keine Auslöseentscheidung für das Aufblasen des Gassacks 3 vor, so wird die erfindungsgemäße Vorrichtung im Normalbetrieb verwendet. Der Normalbetrieb ist ebenfalls anhand von Figur 2 dargestellt:

Im ersten Verfahrensschritt 15 sendet die Sende-/Empfangseinrichtung 5 ein codiertes elektromagnetisches Signal 6 aus.

Im Verfahrensschritt 16 empfängt die Codekarte 42 das codierte Signal 6, modifiziert das Signal, beispielsweise über Frequenzmodulation, und sendet ein modifizierte Signal 7 an die Sende-/Empfangseinrichtung 5 zurück.

Im folgenden Verfahrensschritt 18 empfängt die Sende-/Empfangseinrichtung 5 das modifizierte Signal 7 und leitet es an die Diebstahlschutz-Auswerteeinrichtung 82 innerhalb der Auswerteeinrichtung 80 weiter.

Im Verfahrensschritt 19 wird die Zugangsberechtigung innerhalb der Diebstahlschutz-Auswerteeinrichtung 82 durch Vergleiche der empfangenen modifizierten Signale 7 mit gespeicherten Mustern von zugangsberechtigten Empfangssignalen überprüft. Außerdem bestimmt die Diebstahlschutz-Auswerteeinrichtung 82, ggf. unter Verwendung von entsprechenden Empfangssignalen von Sende-/Empfangseinheiten 5 an anderen Stellen des Kraftfahrzeuges, die Entfernung der Chipkarte 42 zur Sende-/Empfangseinheit 5 und ermittelt insbesondere auch, ob die Codekarte 42 sich innerhalb oder außerhalb des Kraftfahrzeugs befindet.

Sendet die Codekarte 42 ein zugangsberechtigtes modifiziertes Signal 7 an die Sende-/Empfangseinheit 5 zurück, so wird im Verfahrensschritt 20 das Fahrzeug entriegelt oder bleibt entriegelt, sofern sich die Chipkarte 42 bereits im Inneren des Kraftfahrzeugs befindet.

Sendet die Codekarte 42 kein berechtigtes modifiziertes Signal 7 an die Sende-/Empfangseinheit 5 zurück, so bleibt im Verfahrensschritt 21 das Fahrzeug verriegelt. Ist das Fahrzeug darüber hinaus mit einer elektronischen Wegfahrsperre ausgestattet, so bleibt auch diese aktiviert, so dass der Besitzer einer nicht berechtigten Codekarte 42 weder das Auto betreten kann noch, beispielsweise nach einem gewaltsamen Eindringen in das Fahrzeug, das Kraftfahrzeug in Fahrbereitschaft bringen kann.

Der eben beschriebene Ablauf des erfindungsgemäßen Verfahrens unter Verwendung einer erfindungsgemäßen Vorrichtung für den Insassenschutz in einem Kraftfahrzeug und zur Diebstahlsicherung des Kraftfahrzeugs kann selbstverständlich auch in anderer Reihenfolge erfolgen. Entscheidend für die Verwendung einer erfindungsgemäßen Vorrichtung ist dabei lediglich, dass zumindest Teile einer Sende-/Empfangseinrichtung sowohl zur Bestimmung des Entfaltungsgrades eines Gassacks für den Insassenschutz sowie zur Bestimmung von dessen Entfaltungsgeschwindigkeit genutzt wird als auch zur Diebstahlsicherung des Kraftfahrzeugs durch ein berührungsloses Abfragen von Schlüssel-Codekarten, zum Beispiel Chipkarten, mit Hilfe von Mikrowellen-, Radar-, Ultraschall-Signalen oder ähnlichem.

## Patentansprüche

1. Vorrichtung für den Insassenschutz in einem Kraftfahrzeug und zur Diebstahlsicherung des Kraftfahrzeuges
mit
- einem durch eine Fülleinrichtung mit Gas aufblasbaren Gaskissen (3),
- eine Sende-/Empfangseinrichtung (5) für elektromagnetische Wellen (6, 7) und
- einer mit dieser verbundenen Insassenschutz - Auswerteeinrichtung (81),
wobei an dem Gaskissen (3) zumindest eine Insassenschutz - Abfrageeinheit (41) angeordnet ist, die von der Sende-/Empfangseinrichtung (5) kontaktlos abfragbar ist und **dadurch** in der Insassenschutz - Auswerteeinrichtung (81) Informationen über den Entfaltungsgrad und/oder die Entfaltungsgeschwindigkeit des Gaskissens (3) bereitgestellt sind,
**dadurch gekennzeichnet, daß** die Vorrichtung
eine Diebstahlschutz - Auswerteeinrichtung (82) aufweist, wobei zumindest eine tragbare Diebstahlschutz
- Abfrageeinheit (42) ebenfalls von der Sende-/Empfangseinrichtung (5) kontaktlos abfragbar ist und **dadurch** Informationen über die Berechtigung der Diebstahlschutz - Abfrageeinheit (42) und/oder über die Entfernung der Diebstahlschutz - Abfrageeinheit (42) von der Sende-/Empfangseinrichtung (5) aufgrund des von der Diebstahlschutz
- Abfrageeinheit (42) zurückgegebenen Signals (7) in der Diebstahlschutz - Auswerteeinrichtung (82) zur Verfügung stehen.

2. Vorrichtung nach Anspruch 1, **dadurch gekennzeichnet, dass** die Sende-/Empfangseinrichtung (5) innerhalb der Fahrzeugarmatur angeordnet ist.

3. Vorrichtung nach Anspruch 1 oder 2, **dadurch gekennzeichnet, dass** mindestens eine elektronische Baueinheit für den Empfang oder/und das Aussenden der Signale der Insassenschutz
- Abfrageeinheit (41) und der Diebstahlschutz - Abfrageeinheit (42) gleich ist.

4. Vorrichtung nach Anspruch 3, **dadurch gekennzeichnet, dass** eine gemeinsam genutzte elektronische Baueinheit die Antenne ist.

5. Vorrichtung nach einem der vorgenannten Ansprüche, **dadurch gekennzeichnet, dass** die Insassenschutz - Auswerteeinrichtung (81) und die Diebstahlschutz - Auswerteeinrichtung (82) Teil einer gemeinsamen Auswerteeinrichtung (80) innerhalb eines Gehäuses sind.

6. Vorrichtung nach Anspruch 5, **dadurch gekennzeichnet, dass** die Insassenschutz - Auswerteeinrichtung (81) und die Diebstahlschutz - Auswerteeinrichtung (82) durch unterschiedliche Betriebsmodi von Software in der gemeinsamen Auswerteeinrichtung (80) gebildet werden.

7. Vorrichtung nach einem der vorgenannten Ansprüche, **dadurch gekennzeichnet, dass** eine Insassenschutz - Abfrageeinheit (41) mit einem Reflektor gebildet ist.

8. Vorrichtung nach Anspruch 7, **dadurch gekennzeichnet, dass** der Reflektor polarisierend ist.

9. Vorrichtung nach einem der Ansprüche 1 bis 6, **dadurch gekennzeichnet, dass** eine Insassenschutz - Abfrageeinheit (41) mit einem Transponder gebildet ist.

10. Vorrichtung nach Anspruch 9, **dadurch gekennzeichnet, dass** ein Transponder mit einer Logikschaltung ausgebildet ist, die die Rücksendung einer kodierten Welle (7) zur Sende-/Empfangseinrichtung (5) ermöglicht.

11. Verfahren zum Schutz von Insassen eines Kraftfahrzeugs und zur Diebstahlsicherung des Kraftfahrzeuges unter Verwendung einer Vorrichtung nach einem der Ansprüche 1 bis 10 **dadurch gekennzeichnet, dass**
im Normalbetrieb des Kraftfahrzeugs, ohne erfolgte Aktivierung einer Fülleinrichtung zum Befüllen eines aufblasbaren Gaskissens (3),
- eine Sende-/Empfangseinrichtung (5) ein codiertes Signal aussendet,
- eine tragbare Diebstahlschutz - Abfrageeinheit (42) das codierte Signal empfängt und ein modifiziertes Signal an die Sende-/Empfangseinrichtung (5) zurücksendet,
- die Sende-/Empfangseinrichtung (5) das modifizierte Signal empfängt und
- dadurch einer Diebstahlschutz - Auswerteeinrichtung (82) Informationen über die Berechtigung der Diebstahlschutz - Abfrageeinheit (42) und/oder über die Entfernung der Diebstahlschutz - Abfrageeinheit (42) von der Sende-/Empfangseinrichtung (5) zur Verfügung gestellt werden,
im Auslösefall jedoch, bei erfolgter Aktivierung der Fülleinrichtung zum Befüllen des aufblasbaren Gaskissens (3),
- die Sende-/Empfangseinrichtung (5) kontaktlos Signale einer Insassenschutz - Abfrageeinheit (41) des Gaskissens 3 abfragt, wodurch der mit der Sende-/Empfangseinheit (5) verbundenen Insassenschutz - Auswerteeinheit (81) Informationen über den Entfaltungsgrad und/oder die Entfaltungsgeschwindigkeit des Gaskissens (3) bereitgestellt werden.

12. Verfahren nach Anspruch 11 **dadurch gekennzeichnet, dass** zur Abfrage der Diebstahlschutz - Abfrageeinheit (42) durch die Sende-Empfangseinrichtung (5) anders codierte Signale verwendet werden als bei der Abfrage des Entfaltungsgrads und/oder der Entfaltungsgeschwindigkeit des Gaskissens (3)

13. Verfahren nach einem der Ansprüche 11 oder 12, **dadurch gekennzeichnet, dass** auch im Normalbetrieb des Kraftfahrzeugs,
ohne erfolgte Aktivierung der Fülleinrichtung zum Befüllen des aufblasbaren Gaskissens (3), eine zeitlich regelmäßige Abfrage der Insassenschutz - Abfrageeinheit (42) durch die Sende-/Empfangseinrichtung (5) durchgeführt wird und dadurch Informationen über eine ordnungsgemäße Funktionsweise der Insassenschutz - Abfrageeinheit (41) für die Insassenschutz - Auswerteeinrichtung (81) bereitgestellt werden.

## Claims

1. Device for occupant protection in a motor vehicle and for anti-theft protection of the motor vehicle
having
- an airbag (3) which can be inflated with gas by means of a filler device,
- a transceiver device (5) for electromagnetic waves (6, 7) and
- an occupant protection evaluation device (81) connected to said transceiver device,
wherein disposed on the airbag (3) is at least one occupant protection interrogation unit (41) which can be interrogated by contactless means by the transceiver device (5) and as a result information regarding the degree of deployment and/or the speed of deployment of the airbag (3) is provided in the occupant protection evaluation device (81),
**characterised in that** the device has an anti-theft protection evaluation device (82), wherein at least one portable anti-theft protection interrogation unit (42) can also be interrogated by contactless means by the transceiver device (5) and as a result information regarding the authorisation of the anti-theft protection interrogation unit (42) and/or regarding the distance of the anti-theft protection interrogation unit (42) from the transceiver device (5) on the basis of the signal (7) returned by the anti-theft protection interrogation unit (42) is provided in the anti-theft protection evaluation device (82).

2. Device according to claim 1, **characterised in that** the transceiver device (5) is disposed within the vehicle instrument panel.

3. Device according to claim 1 or 2, **characterised in that** at least one electronic structural unit for the reception and/or transmission of the signals of the occupant protection interrogation unit (41) and of the anti-theft protection interrogation unit (42) is the same.

4. Device according to claim 3, **characterised in that** one shared electronic structural unit is the antenna.

5. Device according to one of the preceding claims,
**characterised in that** the occupant protection evaluation device (81) and the anti-theft protection evaluation device (82) are part of a combined evaluation device (80) accommodated within a single housing.

6. Device according to claim 5, **characterised in that** the occupant protection evaluation device (81) and the anti-theft protection evaluation device (82) are formed by means of different software operating modes in the combined evaluation device (80).

7. Device according to one of the preceding claims,
**characterised in that** an occupant protection interrogation unit (41) is formed by means of a reflector.

8. Device according to claim 7, **characterised in that** the reflector is polarizing.

9. Device according to one of the claims 1 to 6, **characterised in that** an occupant protection interrogation unit (41) is formed by means of a transponder.

10. Device according to claim 9, **characterised in that** a transponder is embodied by means of a logic circuit which enables a coded wave (7) to be transmitted back to the transceiver device (5).

11. Method for protecting occupants of a motor vehicle and for anti-theft protection of the motor vehicle using a device according to one of the claims 1 to 10, **characterised in that** in the normal operating mode of the motor vehicle, without completed activation of a filler device for filling an inflatable airbag (3),
- a transceiver device (5) transmits a coded signal,
- a portable anti-theft protection interrogation unit (42) receives the coded signal and transmits a modified signal back to the transceiver device (5),
- the transceiver device (5) receives the modified signal and
- as a result provides an anti-theft protection evaluation device (82) with information regarding the authorization of the anti-theft protection interrogation unit (42) and/or regarding the distance of the anti-theft protection interrogation unit (42) from the transceiver device (5),
in the activation case, however, upon completed activation of the filler device for filling the inflatable airbag (3),
- the transceiver device (5) interrogates signals of an occupant protection interrogation unit (41) of the airbag (3) by contactless means, as a result of which the occupant protection evaluation unit (81) connected to the transceiver unit (5) is provided with information regarding the degree of deployment and/or the speed of deployment of the airbag (3).

12. Method according to claim 11, **characterised in that** differently coded signals are used for the interrogation of the anti-theft protection interrogation unit (42) by the transceiver device (5) than for the interrogation of the degree of deployment and/or the speed of deployment of the airbag (3).

13. Method according to one of the claims 11 or 12,
**characterised in that** even in the normal operating mode of the motor vehicle, without completed activation of the filler device for filling the inflatable airbag (3), an interrogation of the occupant protection interrogation unit (42) by the transceiver device (5) is performed at regular time intervals and as a result information regarding the proper functioning of the occupant interrogation unit (41) is provided for the occupant protection evaluation device (81).

## Revendications

1. Dispositif de protection des occupants d'un véhicule à moteur et d'antivol du véhicule à moteur comportant
- un coussin à gaz (3) gonflable par le biais d'un dispositif de remplissage à l'aide de gaz,
- une unité d'émetteur-récepteur (5) pour ondes électromagnétiques (6, 7) et
- un dispositif d'évaluation de la protection des occupants (81) qui lui est relié,
dans lequel au niveau du coussin à gaz (3) est placée au moins une unité d'interrogation de protection des occupants (41) qui peut être interrogée à distance par l'émetteur-récepteur (5) et qui fournit des informations sur le degré de déploiement et/ou la vitesse de déploiement du coussin à gaz (3) dans le dispositif d'évaluation de la protection des occupants (81),
**caractérisé par le fait que** le dispositif présente un dispositif d'évaluation de l'antivol (82), au moins une unité d'interrogation portable de l'antivol (42) qui est également interrogeable à distance par l'émetteur-récepteur (5) et fournissant ainsi des informations sur l'autorisation de l'unité d'interrogation de l'antivol (42) et/ou sur la distance de l'unité d'interrogation de l'antivol (42) par rapport à l'émetteur-récepteur (5) sur la base du signal renvoyé (7) par l'unité d'interrogation de l'antivol (42) dans le dispositif d'évaluation de l'antivol (82).

2. Dispositif selon la revendication 1, **caractérisé par le fait que** l'émetteur-récepteur (5) est placé à l'intérieur du tableau de bord.

3. Dispositif selon la revendication 1 ou 2, **caractérisé par le fait qu**'au moins un composant électronique destiné à la réception et/ou à l'émission des signaux de l'unité d'interrogation de protection des occupants (41) et de l'unité d'interrogation de l'antivol (42) est commun.

4. Dispositif selon la revendication 3, **caractérisé par le fait que** l'antenne est un composant électronique à usage commun.

5. Dispositif selon l'une quelconque des revendications précédentes, **caractérisé par le fait que** le dispositif d'évaluation de la protection des occupants (81) et le dispositif d'évaluation de l'antivol (82) font partie d'une unité d'évaluation commune (80) dans un boîtier.

6. Dispositif selon la revendication 5, **caractérisé par le fait que** le dispositif d'évaluation de la protection des occupants (81) et le dispositif d'évaluation de l'antivol (82) sont des modes de fonctionnement différents du logiciel dans l'unité d'évaluation commune (80).

7. Dispositif selon l'une quelconque des revendications précédentes, **caractérisé par le fait qu**'une unité d'interrogation de protection des occupants (41) est constituée par un réflecteur.

8. Dispositif selon la revendication 7, **caractérisé par le fait que** le réflecteur est polarisant.

9. Dispositif selon une des revendications 1 à 6, **caractérisé par le fait qu**'une unité d'interrogation de protection des occupants (41) est constituée par un transpondeur.

10. Dispositif selon la revendication 9, **caractérisé par le fait qu'**un transpondeur est constitué par un circuit logique permettant le renvoi d'une onde codée (7) à l'émetteur-récepteur (5).

11. Procédé de protection des occupants d'un véhicule à moteur et de l'antivol du véhicule à moteur utilisant un dispositif selon une des revendications 1 à 10, **caractérisé par le fait qu**'en fonctionnement normal du véhicule à moteur, sans activation d'un dispositif de remplissage destiné au remplissage d'un coussin à gaz gonflable (3),
- Une unité d'émetteur-récepteur (5) émet un signal codé,
- une unité portable d'interrogation de l'antivol (42) reçoit le signal codé et renvoie un signal modifié à l'émetteur-récepteur (5),
- l'émetteur-récepteur (5) reçoit le signal modifié et
- ainsi des informations sont fournies à unité d'évaluation de l'antivol (82) sur l'autorisation de l'unité d'interrogation de l'antivol (42) et/ou sur l'éloignement de l'unité d'interrogation de l'antivol (42) de l'émetteur-récepteur (5),
par contre, en cas de déclenchement, lorsque le dispositif de remplissage destiné au remplissage du coussin à gaz gonflable (3) a été activé,
- l'émetteur-récepteur (5) interroge à distance les signaux émis par l'unité d'interrogation de protection des occupants (41) du coussin à gaz (3) ce qui fournit des informations au dispositif d'évaluation de la protection des occupants (81) relié à l'émetteur-récepteur (5) sur le degré de déploiement et/ou la vitesse de déploiement du coussin à gaz (3).

12. Procédé selon la revendication 11, **caractérisé par le fait que** pour l'interrogation de l'unité d'interrogation de l'antivol (42) par l'émetteur-récepteur (5), on utilise des signaux codés différemment que lors de l'interrogation du degré de déploiement et/ou de la vitesse de déploiement du coussin à gaz (3).

13. Procédé selon une des revendications 11 ou 12, **caractérisé par le fait qu**'y compris lors du fonctionnement normal du véhicule à moteur, en l'absence d'activation du dispositif de remplissage destiné au remplissage du coussin à gaz gonflable (3), une interrogation régulière de l'unité d'interrogation de l'antivol (42) par l'émetteur-récepteur (5) est réalisée et qu'ainsi des informations sont fournies sur le bon fonctionnement de l'unité d'interrogation de protection des occupants (41) au dispositif d'évaluation de la protection des occupants (81).
